# EUROPEAN PATENT APPLICATION

(11) **EP 4 407 643 A1**
(43) Date of publication of application: **31.07.2024**
(21) Application number: 22906955.4
(22) Date of filing: 22.09.2022
(51) Int. Cl.: H01F 41/02, C21D 8/12, C22C 38/00, C22C 38/60

(54) **METHOD FOR MANUFACTURING LAMINATED IRON CORE**

(30) Priority: 14.12.2021 JP 2021202286
(71) Applicant: JFE Steel Corporation, Tokyo 100-0011 (JP)
(72) Inventor: OMURA, Takeshi, Tokyo 100-0011 (JP); ICHIHARA, Yoshihisa, Tokyo 100-0011 (JP); YOSHIZAKI, Souichiro, Tokyo 100-0011 (JP)
(74) Representative: Hoffmann Eitle
(86) International application number: PCT/JP2022/035417
(87) International publication number: WO 2023/112420

(57) **Abstract**

Methods for manufacturing a laminated core that enable good iron loss properties to be achieved are provided.

A method for manufacturing a laminated core of the present invention includes processing an electrical steel sheet into pieces of the electrical steel sheet that have a predetermined shape, by using a pulsed laser having a beam diameter of 200 um or less and a pulse width of a nanosecond or more or by using a continuous laser having a beam diameter of 200 um or less, the electrical steel sheet including an insulating coating on a surface, the insulating coating having a roughness factor of a surface of 2.0 or greater; and stacking the pieces of the electrical steel sheet resulting from the processing. Another method for manufacturing a laminated core of the present invention includes processing an electrical steel sheet into pieces of the electrical steel sheet that have a predetermined shape, the processing being performed by using a picosecond pulsed laser or a femtosecond pulsed laser or being performed in water or in a state in which a water film is present on a surface of the electrical steel sheet by using a pulsed laser having a pulse width of a nanosecond or more or by using a continuous laser, the electrical steel sheet including an insulating coating on the surface; and stacking the pieces of the electrical steel sheet resulting from the processing.

## Description

### Technical Field

The present invention relates to methods for manufacturing a laminated core and, in particular, to methods for manufacturing a core for a transformer or a core for a rotary machine, the cores including a stack of pieces of an electrical steel sheet.

### Background Art

Cores for a transformer or a rotary machine are produced by processing an electrical steel sheet into pieces having a predetermined shape and subsequently stacking the pieces. Methods for the processing for providing pieces having a predetermined shape include punching, which is typically used in rotary machine applications, and beveling, which is typically used in transformer applications. In instances where a transformer or a rotary machine is produced with a laminated core produced by punching or beveling, a problem arises in that a variation in iron loss is large.

Techniques for reducing the variation in iron loss are disclosed in, for example, Patent Literature 1 to 3. Patent Literature 1 cites and focuses on strain that is introduced during processing, as being a possible cause of the variation in iron loss, and, accordingly, proposes a method that relieves plastic strain by annealing the workpiece after punching. Similar to Patent Literature 1, Patent Literature 2 also focuses on the strain and proposes a method that relieves the strain by shaving. Patent Literature 3 focuses on lamination accuracy and discloses a technique for controlling a shape of a steel sheet resulting from beveling; the shape is controlled to fall within a predetermined range to reduce a variation in the lamination accuracy, and as a result, a void in a joint of the steel sheet decreases in size, which leads to improvement in a transformer core in terms of iron loss, an excitation current, and noise.

### Citation List

### Patent Literature

PTL 1: Japanese Unexamined Patent Application Publication No. 7-298570
PTL 2: Japanese Unexamined Patent Application Publication No. 2011-217565
PTL 3: Japanese Unexamined Patent Application Publication No. 2014-86597

### Summary of Invention

### Technical Problem

Using any of the above-described techniques of the related art can improve the iron loss properties of laminated cores to some extent. However, there is still a need for further improvement in the properties.

The present invention has been made in view of the above-described circumstances, and an object of the present invention is to provide methods for manufacturing a laminated core that enable good iron loss properties to be achieved.

### Solution to Problem

The present inventors closely analyzed a laminated core having an iron loss much greater than a designed value and, consequently, found that there are two causes.

One of the causes is short-circuiting due to destruction of insulation at or near a processed portion of an electrical steel sheet that serves as a material of a core that constitutes a laminated core. Laminated cores are manufactured as follows: an electrical steel sheet including an insulating coating on a surface is processed into pieces having a predetermined shape to form a material of the core, and the pieces of the material of the core are stacked. As used herein, the expression "processed into pieces having a predetermined shape" means that an electrical steel sheet including an insulating coating on a surface, which is an electrical steel sheet serving as a workpiece, is processed into pieces having a shape that conforms to the shape of the core that is to be produced. It was found that the occurrence of short-circuiting is due to the formation of cracks propagating through the insulating coating at or near the processed portion of the material of the core, the formation of cracks being a result of the processing, and that limiting the formation of cracks can significantly improve the iron loss properties of a resulting laminated core. It was also found that the increase in iron loss due to short-circuiting is associated with an amount of voids present between stacked layers at or near the processed portion of the material of the core in the instance in which a laminated core is formed by stacking pieces of the material of the core and that the amount of voids can be controlled by regulating an amount of shear droop on a processed surface of the material of the core.

The other of the causes is as follows. In some laminated cores, the cores have a configuration in which portions of the processed surface of the material of the core are abutted against each other. In laminated cores including such a butted portion, the butted portion of the core has a very high magnetic reluctance, and, therefore, is in a state that makes it very difficult for magnetic flux to flow therethrough. The present inventors found that an arithmetic mean roughness Ra of the processed surface of the material of the core has a significant influence on the magnetic reluctance and that, to reduce the magnetic reluctance, it is very important to reduce the roughness of the processed surface, thereby reducing a size of the void formed in the joint (butted portion) of the core. Furthermore, the present inventors newly found that in instances where the size of the void formed in the joint (void fraction in the joint surface) is reduced, another factor that affects the flow of the magnetic flux is portions of the insulating coating that are present on the processed surface of the material of the core.

The present inventors conducted studies to develop a processing method that can perform control regarding the cracks propagating through the insulating coating at or near the processed portion of the material of the core (hereinafter also referred to simply as "cracks"), the amount of shear droop on the processed surface of the material of the core (hereinafter also referred to simply as "shear droop"), the arithmetic mean roughness of the processed surface (hereinafter also referred to simply as "roughness of the processed surface"), and the portions of the insulating coating caused to be present on the processed surface. As a result, it was found that utilizing a shock wave makes it possible to control the above-described parameters (cracks, shear droop, roughness of the processed surface, and portions of the insulating coating caused to be present on the processed surface) relatively easily and consistently.

The present invention was developed based on the above-described findings. Specifically, primary features of the present invention are as follows.
[1] A method for manufacturing a laminated core including processing an electrical steel sheet into pieces of the electrical steel sheet that have a predetermined shape, by using a pulsed laser having a beam diameter of 200 um or less and a pulse width of a nanosecond or more or by using a continuous laser having a beam diameter of 200 um or less, the electrical steel sheet including an insulating coating on a surface, the insulating coating having a roughness factor of a surface of 2.0 or greater; and stacking the pieces of the electrical steel sheet resulting from the processing to manufacture the laminated core.
[2] A method for manufacturing a laminated core including processing an electrical steel sheet into pieces of the electrical steel sheet that have a predetermined shape, the processing being performed by using a picosecond pulsed laser or a femtosecond pulsed laser or being performed in water or in a state in which a water film is present on a surface of the electrical steel sheet by using a pulsed laser having a pulse width of a nanosecond or more or by using a continuous laser, the electrical steel sheet including an insulating coating on the surface; and stacking the pieces of the electrical steel sheet resulting from the processing to manufacture the laminated core.

### Advantageous Effects of Invention

The present invention can provide methods for manufacturing a laminated core that enable good iron loss properties to be achieved.

### Brief Description of Drawings

[Fig. 1] Fig. 1 is a schematic diagram illustrating a formation mechanism of cracks formation, a shear droop, a roughness of a processed surface and portions of an insulating coating caused to be present on the processed surface in an electrical steel sheet during punching.
[Fig. 2] Fig. 2 is a graph showing a relationship between [iron loss of EI-core/iron loss of base material] and a roughness factor of a surface of an electrical steel sheet that serves as a material of the core.
[Fig. 3] Fig. 3 is a graph showing a relationship between [iron loss of EI-core/iron loss of base material] and a pulse width of lasers used for processing.
[Fig. 4] Fig. 4 is a graph showing a relationship between [iron loss of EI-core/iron loss of base material] and a beam diameter of lasers used for processing. Description of Embodiments

The present invention will be described in detail below.

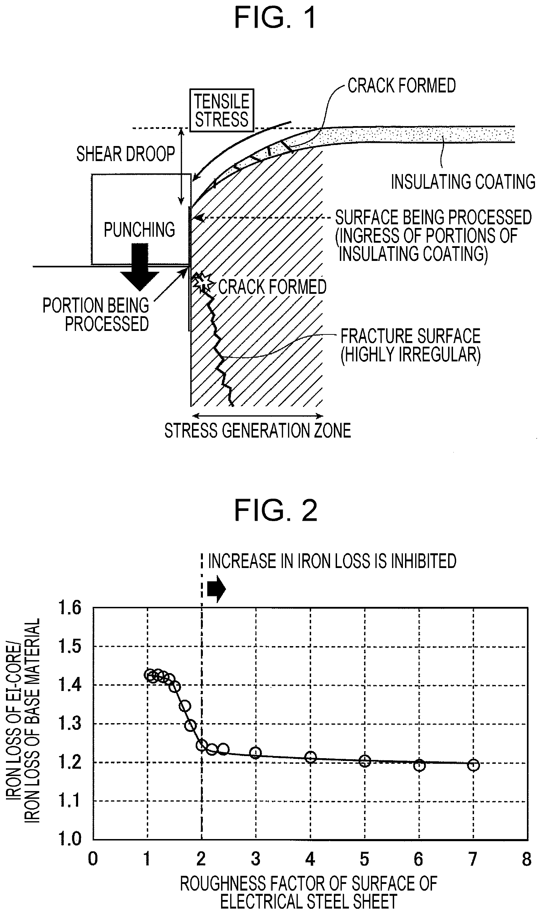

A mechanism that is presumed to generate each of the parameter will be described before describing a processing method for processing an electrical steel sheet that serves as a workpiece into pieces having a predetermined shape. Fig. 1 is a schematic illustration of typical punching being performed. A reason for the formation of cracks is as follows. During the processing, a tensile stress is generated in or near the portion being processed of the electrical steel sheet, and when the electrical steel sheet can no longer withstand the stress, cracks are formed in an insulating coating present on a surface of the steel sheet. Accordingly, a preferred way to reduce cracking is to inhibit, to the greatest extent possible, the generation of the tensile stress associated with processing. An effective way to inhibit the generation of tensile stress is to reduce a stress that is introduced to the portion being processed, in which the tensile stress is generated.

A shear droop is formed when the electrical steel sheet (workpiece) is significantly deformed as a result of prolonged exertion of a processing-induced stress on the portion being processed. More specifically, a shear droop is formed when a surface of the electrical steel sheet is bent in or near the portion being processed as a result of prolonged exertion of a processing-induced stress on the portion being processed of the electrical steel sheet. For the prevention of the shear droop, it is important to reduce the stress that is introduced by the processing and, in addition, to shorten the processing time to the greatest extent possible, thereby preventing the deformation of the electrical steel sheet.

Roughness of the processed surface increases when, after the formation of cracks in the electrical steel sheet due to the stress in or near the portion being processed, the electrical steel sheet undergoes a ductile fracture as a result of the propagation of the cracks. Accordingly, in order to inhibit an increase in the roughness of the processed surface, it is important to reduce a region in or near the portion being processed in which a stress is generated and reduce a magnitude of the stress, to the greatest extent possible, thereby reducing cracks that are formed in the electrical steel sheet.

The presence of portions of the insulating coating on the processed surface is caused when, during processing, the insulating coating is drawn toward the portion being processed of the electrical steel sheet, by the tensile stress generated in the portion being processed, as in the case of the cracks formed in the insulating coating. An effective way to reduce an amount of the portions of the insulating coating present on the processed surface is to reduce an area on which the tensile stress is generated and the magnitude of the tensile stress.

Accordingly, important keys to selecting a processing method for processing an electrical steel sheet into pieces having a predetermined shape are (i) reducing the area affected by the stress generated in the portion being processed and also reducing the magnitude of the stress and (ii) shortening the process time to the greatest extent possible.

For the processing of an electrical steel sheet into pieces having a predetermined shape, commonly used processing methods are, for example, punching and beveling, in which processing is carried out with a blade being in contact with the steel sheet, and laser processing in air, in which processing is carried out in a contactless manner, by introducing heat into the steel sheet. Processing methods in which processing is carried out with a blade being in contact with the steel sheet have a relatively long processing time compared with contactless processing methods. Furthermore, processing methods in which processing is carried out with a blade being in contact with the steel sheet cause a high stress in or near the portion being processed, which is a stress introduced into the steel sheet during the processing. On the other hand, laser processing in air can be completed in a relatively short time. However, a problem arises in that the use of heat for the processing of the steel sheet causes heat to be conducted by heat transfer across a wide area in or near the portion being processed, which results in the generation of stress due to heating and contraction over a wide area in or near the portion being processed.

Processing methods for an electrical steel sheet that have been employed in the related art do not sufficiently address the important keys described above. In the present invention, regarding processing methods for an electrical steel sheet, studies were conducted on processing methods that utilize a shock wave, to which not much attention has been paid so far for the processing of electrical steel sheets. It was found that processing methods that utilize a shock wave enable highly favorable processing to be achieved, provided that predetermined conditions are satisfied. In the following description, keys to the processing conditions for a processing method that utilizes a shock wave will be described.

### (Controlling Roughness Factor of Surface of Electrical Steel Sheet)

The first key is to control a roughness factor of a surface of the electrical steel sheet that serves as the workpiece. Note that since the electrical steel sheet of the present invention includes an insulating coating on a surface, the roughness factor of the surface of the electrical steel sheet is the roughness factor of the surface of the insulating coating. The shock wave is generated by forming a plasma on the surface of the electrical steel sheet and inhibiting the expansion of the plasma. A preferred way to inhibit the expansion of the plasma is to utilize water. Having a high value of the roughness factor of the surface of the electrical steel sheet means that a surface area of the surface of the electrical steel sheet is increased as a result of, for example, the formation of cracks in the insulating coating. Since water in air is adsorbed onto the surface of the electrical steel sheet, increasing the surface area of the surface of the electrical steel sheet increases an amount of adsorption of water. When the amount exceeds a specific amount, the effect of inhibiting the expansion of plasma is produced. A specific roughness factor of the surface of the electrical steel sheet that results in an improved processed state was derived in experiments, which will be described below.

### <Experiment 1>

A steel slab containing Si: 3.0 mass%, Mn: 0.15 mass%, and Al: 0.2 mass% with the balance being Fe and incidental impurities was manufactured. The steel slab was subjected to hot rolling to form a hot rolled steel sheet of 1.6 mm and subsequently subjected to hot band annealing at 950°C for 60 seconds. Subsequently, the steel sheet was subjected to cold rolling to form a steel sheet having a thickness of 0.35 mm. Thereafter, the steel sheet was subjected to final annealing under the conditions of 980°C, 10 seconds, N₂:H₂ = 90:10 (volume ratio), and a dew point of -35°C. Subsequently, a coating liquid for forming an insulating coating was applied to the surface of the steel sheet resulting from the final annealing. The coating liquid contained a mixture of aluminum dichromate, an emulsion resin, and ethylene glycol. The resultant was then baked at 350°C to form an insulating coating. In this manner, an electrical steel sheet coil was manufactured. The coating liquid was applied in various amounts (wet film thicknesses), ranging from 1 to 10 um.

Epstein test specimens (material of a core) were cut from the electrical steel sheet coil prepared as described above. One half of the test specimens were cut in a rolling direction, and the other half were cut in a direction perpendicular to the rolling direction. An iron loss W15/50 of the material of a core (iron loss of the base material) was evaluated in accordance with a method specified in JIS C 2550. After the iron loss of the base material was evaluated, a specific surface area of the material of a core was measured with a gas adsorption method that used a Kr gas. A true surface area of the surface including microscopic irregularities was calculated from the result, and the true surface area was divided by an apparent surface area determined by assuming that the surface is completely smooth, to derive the roughness factor of the surface of the electrical steel sheet. In parallel, discrete cores for an EI-core were prepared, by laser processing, from the electrical steel sheet coil prepared in the manner described above, and the iron loss of the EI-core (iron loss of EI-core) was measured. The laser processing was performed with a continuous laser (continuous wave laser) at an output of 500 W, a processing speed of 2 mpm, and a beam diameter of 100 um. Fig. 2 shows an influence of the roughness factor of the surface of the electrical steel sheet, which served as the material of the core, exerted on the ratio between the iron loss of the base material and the iron loss of the EI-core. It can be seen that when the roughness factor of the surface of the electrical steel sheet was 2.0 or greater, an increase in the iron loss of the EI-core with respect to the iron loss of the base material was inhibited. Presumably, the inhibition of an increase in the iron loss was achieved because the water present on the surface of the steel sheet inhibited the expansion of plasma, and, consequently, the processing that used heat changed to processing that used a shock wave, which resulted in the inhibition of cracking, shear droop, roughness of the processed surface, and the presence of the insulating coating on the processed surface, which are described above.

### <Experiment 2>

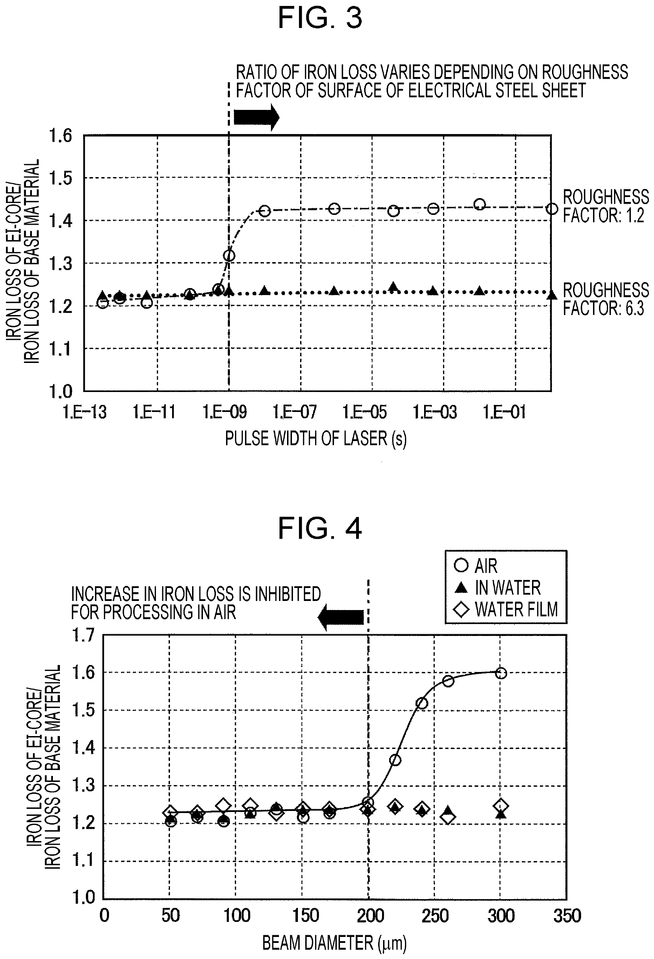

In another experiment, processing was performed with various types of lasers. Electrical steel sheet coils were manufactured. Wet film thicknesses selected for the manufacture of the electrical steel sheet coils were 1.5 um and 9.5 um. Test specimens (materials of a core) cut from the electrical steel sheet coils had respective roughness factors of the surface of 1.2 and 6.3. In this experiment, various types of lasers (with various pulse widths) were used to perform laser processing on the electrical steel sheet coils to prepare the materials of a core. All of the other conditions used for the evaluation were the same as those of Experiment 1, described above. The results are shown in Fig. 3. As shown in Fig. 3, in the instances where the processing was performed with a pulsed laser having a pulse width of less than a nanosecond (1×10⁻⁹ seconds) (denoted as "1.E-09" in Fig. 3), a dependence of the material of the core on the roughness factor of the surface of the electrical steel sheet was not observed, and an increase in iron loss was inhibited under both of the conditions. Presumably, a reason for this is that in the instance where a pulsed laser having a pulse width of less than a nanosecond was used, an energy concentration was greatly increased, which enabled the generation of a shock wave in air, without the help of water. In contrast, in the instances where a laser having a pulse width of a nanosecond or more (or a continuous wave) was used, the inhibition of an increase in iron loss was achieved when the roughness factor of the surface of the electrical steel sheet that served as the material of the core was within the range of the present invention.

### <Experiment 3>

In this experiment, an influence of the beam diameter of the lasers was investigated. In this instance, an electrical steel sheet coil was manufactured, and the wet film thickness selected for the manufacture of the electrical steel sheet coil was 5.0 um. A test specimen (material of a core) cut from the electrical steel sheet coil had a roughness factor of the surface of 3.3. In this experiment, the material of a core was formed by performing laser processing on the electrical steel sheet coil, and the laser processing on the coil was carried out under three conditions: in air, in water, and with a water film formed on the surface of the electrical steel sheet (water film formation), with the beam diameter of the lasers being varied over a range of 50 to 300 um. The beam diameter of the laser is a beam diameter of the laser on the surface of the workpiece, that is, the electrical steel sheet. The other conditions for the experiment were the same as those of Experiment 1. Regarding the processing in air, it was observed that the increase in iron loss resulting from the formation of a laminated core tended to increase when the beam diameter was greater than 200 um, with the tendency being observed even when the roughness factor of the surface of the electrical steel sheet that served as the material of the core was within the range of the present invention; accordingly, it was found that the beam diameter needs to be 200 um or less. A reason for this is presumed to be as follows. In the instance where the water present on the surface of the electrical steel sheet that served as the workpiece was utilized, the effect of inhibiting the expansion of plasma was smaller than in the instances in which the processing was performed in water or with a water film formed on the surface of the electrical steel sheet, and, accordingly, for the generation of a shock wave, a higher energy concentration needed to be achieved by using a smaller beam diameter. In contrast, it is believed that in the instance where the processing was performed with a water film formed on the surface of the electrical steel sheet, or the processing was performed in water, the effect of inhibiting the expansion of plasma was large, which enabled the generation of a shock wave independently of the beam diameter of the laser; thus, the processing that took place was one that used the shock wave, and, consequently, the increase in iron loss resulting from the formation of a laminated core was inhibited.

The "state in which a water film is present on the surface of the electrical steel sheet that serves as the workpiece" is a state in which the laser irradiation area (region to which laser processing is applied) of the surface of the electrical steel sheet, to which a laser beam is applied during the laser processing, is covered with a water film. The "state in which a water film is present on the surface of the electrical steel sheet" may be a state in which the surface of the electrical steel sheet is entirely covered with a water film or may be a state in which a portion of the surface of the electrical steel sheet, that is, a partial region of the surface of the electrical steel sheet including the laser irradiation area of the surface of the electrical steel sheet is covered with a water film. Furthermore, methods for forming the water film are not particularly limited, and examples of the methods include a method that uses a spray nozzle or the like to supply water to the surface of the electrical steel sheet.

Now, the conditions for manufacturing a laminated core of the present invention will be described in detail.

The electrical steel sheet used in the present invention may either be a grain-oriented electrical steel sheet or a non-oriented electrical steel sheet. Typically, a non-oriented electrical steel sheet is used for cores for a rotary machine, and a grain-oriented electrical steel sheet is used for cores for a transformer; however, there are exceptions, and, therefore, there are no limitations regarding which of the electrical steel sheets should be used.

There are also no particular limitations regarding a composition of the electrical steel sheet. For example, a composition known in the art may be employed. Preferred compositional ranges of the grain-oriented electrical steel sheet will be described below.

### Si: 2.0 to 8.0 mass%

Si is an element effective for increasing the electrical resistance of the steel, thereby reducing iron loss. When a Si content is 2.0 mass% or greater, the effect of reducing iron loss is sufficiently increased. On the other hand, when the Si content is greater than 8.0 mass%, workability is significantly reduced, and a magnetic flux density also tends to be reduced. Accordingly, it is preferable that the Si content be within a range of 2.0 to 8.0 mass%.

### Mn: 0.005 to 1.0 mass%

Mn is an element necessary for improving hot workability. When a Mn content is less than 0.005 mass%, an effect of the addition is not sufficiently produced. On the other hand, when the Mn content is greater than 1.0 mass%, the magnetic flux density tends to be reduced. Accordingly, it is preferable that the Mn content be within a range of 0.005 to 1.0 mass%.

At Least One Selected from Ni: 0.03 to 1.50 mass%, Sn: 0.01 to 1.50 mass%, Sb: 0.005 to 1.50 mass%, Cu: 0.03 to 3.0 mass%, P: 0.03 to 0.50 mass%, Mo: 0.005 to 0.10 mass%, and Cr: 0.03 to 1.50 mass%

Ni is an element useful for improving a microstructure of a hot rolled steel sheet, thereby improving the magnetic properties. When a Ni content is less than 0.03 mass%, however, the effect of improving the magnetic properties is not significantly produced. On the other hand, when the Ni content is greater than 1.50 mass%, secondary recrystallization may be unstable, which tends to degrade the magnetic properties. Accordingly, in instances where Ni is included, it is preferable that the Ni content be within a range of 0.03 to 1.50 mass%.

Furthermore, Sn, Sb, Cu, P, Mo, and Cr are elements useful for improving the magnetic properties. For all of these elements, when the content is less than the above-described lower limit of the component, the effect of improving the magnetic properties is not significantly produced; on the other hand, when the content is greater than the above-described upper limit of the component, the growth of the secondary recrystallization grains is impaired. Accordingly, for all of these elements, the above-described content ranges are preferable when the elements are included.

Preferably, the balance is Fe and incidental impurities. Preferably, components other than the components described above are present in as small an amount as possible.

Now, preferred compositional ranges of the non-oriented electrical steel sheet will be described.

Si, Al, Mn, and P may be included. In this case, electrical resistance can be increased, and, consequently, a further reduction in iron loss can be achieved without compromising the spirit of the present invention. It is preferable that Si be present in an amount of 0.5 mass% or greater, Al in an amount of 0.1 mass% or greater, Mn in an amount of 0.05 mass% or greater, and P in an amount of 0.01 mass% or greater, so that the effect of reducing iron loss can be produced to a greater degree. On the other hand, adding these elements in large amounts degrades workability, and, accordingly, the upper limits of the contents of these elements preferably are Si: 6.5 mass%, Al: 3.0 mass%, Mn: 3.0 mass%, and P: 0.5 mass%. Note that the effects of the present invention can be sufficiently produced even when these elements are not added, and, therefore, the contents may be Si: less than 0.5 mass%, Al: less than 0.1 mass%, Mn: less than 0.05 mass%, and P: less than 0.01 mass%.

Furthermore, in addition to the components described above, Sb, Sn, and Cr, which are known as elements that improve magnetic properties, may be added alone or in a combination of two or more. Contents of these elements preferably are Sn: 0.5 mass% or less, Sb: 0.5 mass% or less, and Cr: 5.0 mass% or less. A reason for the preference is that the effect of improving magnetic properties no longer increases even when the elements are added in amounts greater than the mentioned content ranges, and that, therefore, an effective effect of improving magnetic properties cannot be expected to be achieved, that is, it is impossible to produce a magnetic-properties-improving effect that is commensurate with the increase in alloying cost.

Preferably, the balance is Fe and incidental impurities. Preferably, components other than the components described above are present in as small an amount as possible.

The electrical steel sheet used in the present invention includes an insulating coating on a surface. The insulating coating is not particularly limited for either the grain-oriented electrical steel sheet or the non-oriented electrical steel sheet and may be, for example, an insulating coating known in the art. It should be noted that in the instance where the processing is performed in air with a laser having a pulse width of a nanosecond or more (or a continuous laser), it is necessary to provide the surface of the electrical steel sheet with microscopic irregularities so that the roughness factor of the surface of the electrical steel sheet can be 2.0 or greater. Methods for achieving the roughness factor of the surface of the electrical steel sheet of 2.0 or greater are not particularly limited. In instances where a tension-imparting insulating coating is to be formed, which is common for grain-oriented electrical steel sheets, a preferred method may be a method in which a coating liquid for forming an insulating tension coating is applied in a manner such that a wet film thickness of 3 um or greater is achieved, and a baking temperature of 850°C or greater is used to form the insulating coating. In instances where a tensionless insulating coating is to be formed, which is common for non-oriented electrical steel sheets, the method may be one in which a coating liquid for forming a non-tension-imparting insulating coating is applied in a manner such that a wet film thickness of 3 um or greater is achieved, and a baking temperature of 200°C or greater is used to form the insulating coating. An example of the insulating tension coating of the grain-oriented electrical steel sheet is a tension coating containing silica and containing, as a major component, magnesium phosphate or aluminum phosphate. An example of the insulating coating of the non-oriented electrical steel sheet is a composite insulating coating primarily made of an inorganic material and further including an organic material. For example, the composite insulating coating is an insulating coating in which at least one inorganic material is present as a major component, and a particulate organic resin is dispersed. Examples of the inorganic material include metal salts, such as metal chromate salts and metal phosphate salts; colloidal silica; Zr compounds; and Ti compounds.

The manufacturing method for processing the electrical steel sheet that serves as the workpiece, to form the electrical steel sheet that serves as the material of a core is limited to laser processing, excluding common processing that uses a blade, such as beveling and punching. In the instance where processing is performed on the electrical steel sheet that serves as the workpiece, to generate a shock wave by laser processing, it is preferable to use a picosecond pulsed laser or a femtosecond pulsed laser. In the instance where a picosecond pulsed laser or a femtosecond pulsed laser is used, the processing atmosphere is not particularly limited. In the instance where a picosecond pulsed laser or a femtosecond pulsed laser is used, it is preferable to perform the processing in air; however, this is not limiting, and the processing may be performed in a different atmosphere, such as a nitrogen gas or an inert gas. Alternatively, the processing may be performed in water or in a state in which a water film is present on the surface of the steel sheet. In instances where a laser having a pulse width of a nanosecond or more is used (the laser may be a continuous laser), the condition to be selected is processing in water or with a water film being present on the surface of the electrical steel sheet that serves as the workpiece, or when the condition of processing in water or with a water film being present is not selected (e.g., when processing in air is selected), the conditions to be selected are the use of an electrical steel sheet in which the roughness factor of the surface of the electrical steel sheet is 2.0 or greater and the use of a beam diameter of the laser of 200 um or less. Consequently, the generation of a shock wave can be achieved, and, therefore, processing that utilizes a shock wave can be achieved. In this instance, the upper limit of the roughness factor of the surface of the electrical steel sheet is not particularly restricted. An example of the roughness factor of the surface of the electrical steel sheet is 12.0 or less. Furthermore, in this instance, the lower limit of the beam diameter of the laser is not particularly restricted. An example of the beam diameter of the laser is 10 um or greater. Note that a "nanosecond pulsed laser" is a laser having a pulse width of 1 nanosecond or more and less than 1000 nanoseconds; the "picosecond pulsed laser" is a laser having a pulse width of 1 picosecond or more and less than 1000 picoseconds; and the "femtosecond pulsed laser" is a laser having a pulse width of 1 femtosecond or more and less than 1000 femtoseconds.

Thus, methods for manufacturing a laminated core provided by the present invention are as set forth in the following (1) to (3). (1) An electrical steel sheet including an insulating coating on a surface, with the insulating coating having a roughness factor of a surface of 2.0 or greater, is processed with a laser having a beam diameter of 200 um or less and a pulse width of a nanosecond or more, into pieces having a predetermined shape (shape of the material of the core) (the laser may be a continuous laser). The pieces of the electrical steel sheet (material of the core) resulting from the processing are stacked to form a laminated core. (2) An electrical steel sheet including an insulating coating on a surface is processed in water or in a state in which a water film is present on the surface, with a laser having a pulse width of a nanosecond or more, into pieces having a predetermined shape (shape of the material of the core) (the laser may be a continuous laser). The pieces of the electrical steel sheet (material of the core) resulting from the processing are stacked to form a laminated core (in this instance, the roughness factor of the surface of the insulating coating and the beam diameter of the laser are not limited). (3) An electrical steel sheet including an insulating coating on a surface is processed with a picosecond pulsed laser or a femtosecond pulsed laser into pieces having a predetermined shape (shape of the material of the core). The pieces of the electrical steel sheet resulting from the processing are stacked to manufacture a laminated core (in this instance, the atmosphere for the processing, the roughness factor of the surface of the insulating coating, and the beam diameter of the laser are not limited).

### EXAMPLES

### (Example 1)

A steel slab was manufactured by continuous casting. The steel slab had a chemical composition containing C: 0.02 mass%, Si: 3.0 mass%, Mn: 0.05 mass%, Ni: 0.08 mass%, Al: 70 mass-ppm, N: 36 mass-ppm, Se: 5 mass-ppm, and S: 12 mass-ppm, with the balance being Fe and incidental impurities. The steel slab was heated to 1200°C. Subsequently, the steel slab was subjected to hot rolling to form a hot rolled steel sheet having a thickness of 2.4 mm, and thereafter, the hot rolled steel sheet was subjected to hot band annealing at 1050°C for 120 seconds. Subsequently, the resulting steel sheet was pickled with hydrochloric acid to remove subscale from the surface and thereafter subjected to cold rolling to form a cold rolled steel sheet having a thickness of 0.27 mm.

Subsequently, decarburization annealing was performed in which the steel sheet was held at a soaking temperature of 820°C for 120 seconds with a degree of oxidation PH₂O/PH₂ of 0.35. Subsequently, an annealing separator containing MgO as a major component was applied, and final annealing for achieving secondary recrystallization, forming a forsterite coating, and achieving purification was performed under the conditions of 1220°C and 5 hr. Thereafter, a coating liquid for forming an insulating tension coating was applied in a manner such that a wet film thickness of 0.5 to 5 um was achieved, and then, the resultant was baked at 890°C, to form an insulating coating. The coating liquid was made of colloidal silica and aluminum phosphate and had a concentration of 60 mass%. The baking process doubled as flattening annealing.

Subsequently, a sample for evaluating an iron loss property of the base material was taken from the electrical steel sheet coil prepared as described above, and the sample was subjected to stress relief annealing at 800°C for 3 hours. Subsequently, the iron loss property of the base material was evaluated in accordance with JIS C 2550. In parallel with the evaluation of the property of the base material, processing was performed on the prepared coil to form pieces that conformed to the shape of a core for a transformer. Thereafter, the processed pieces of the electrical steel sheet (material of the core) having a predetermined shape were stacked. In this manner, a 1500 kVA three-phase three-legged transformer core with a core weight of 1200 kg was produced. Primary and secondary windings were wound around the three legs. The transformer (laminated core) was then excited at 1.7 T and 50 Hz with a phase shift of 120° to measure the iron loss of the transformer.

The processing of the material of the core was performed at a laser output of 3.0 kW and a processing speed of 100 mpm. The other processing conditions are shown in Table 1. Nos. 1, 2, and 3 employed a laser processing method that used a pulsed laser having a pulse width of a nanosecond or more or a continuous laser. In Nos. 1, 2, and 3, the roughness factor of the surface of the electrical steel sheet that serves as the material of the core, in the case of performing processing in air and with the laser, was outside the range of the present invention; consequently, the processing that took place was typical processing that used thermal energy, and thus, the iron loss property of the resulting laminated core was significantly inferior. Nos. 7 and 9 employed a laser processing method that used a pulsed laser having a pulse width of a nanosecond or more or a continuous laser. In Nos. 7 and 9, the roughness factor of the surface of the electrical steel sheet that serves as the material of the core, in the case of performing processing in air and with the laser, was within the range of the present invention, whereas the beam diameter of the laser was greater than the range of the present invention. This resulted in an insufficient energy concentration. As a result, no shock wave was generated, and thus, the processing that took place was typical processing that used thermal energy; consequently, the iron loss property of the resulting laminated core was significantly inferior. In Examples, other than the above-described instances, the processing was performed within the ranges of the present invention; and thus, as can be seen, degradation of the iron loss property of the laminated cores was inhibited, and a good iron loss property was achieved.

**[Table 1]**

| No. | Processing atmosphere | Water film formed | Beam diameter of laser (µm) | Roughness factor of surface of electrical steel sheet | Pulse width of laser | Iron loss of base material (W/kg) | Iron loss of laminated core (W/kg) | Ratio of increase in iron loss ^{*1} | Notes |
|---|---|---|---|---|---|---|---|---|---|
| 1 | Air | No | 100 | 1.6 | Continuous | 0.95 | 1.60 | 1.68 | Comparative Example |
| 2 | Air | No | 100 | 1.6 | 10 µs | 0.95 | 1.58 | 1.66 | Comparative Example |
| 3 | Air | No | 100 | 1.6 | 300 ns | 0.95 | 1.57 | 1.65 | Comparative Example |
| 4 | Air | No | 100 | 1.6 | 90 ps | 0.95 | 1.26 | 1.33 | Example |
| 5 | Air | No | 100 | 1.6 | 200 fs | 0.95 | 1.26 | 1.33 | Example |
| 6 | Air | No | 100 | 3.8 | 10 µs | 0.95 | 1.26 | 1.33 | Example |
| 7 | Air | No | 250 | 3.8 | 100 ns | 0.95 | 1.63 | 1.72 | Comparative Example |
| 8 | Air | Yes | 250 | 1.6 | 10 µs | 0.95 | 1.26 | 1.33 | Example |
| 9 | Air | No | 250 | 3.8 | Continuous | 0.95 | 1.62 | 1.71 | Comparative Example |
| 10 | Air | Yes | 250 | 3.8 | Continuous | 0.95 | 1.30 | 1.37 | Example |
| 11 | Air | No | 50 | 3.8 | Continuous | 0.95 | 1.29 | 1.36 | Example |
| 12 | In water | - | 300 | 1.2 | Continuous | 0.95 | 1.29 | 1.36 | Example |
| 13 | In water | - | 50 | 1.2 | 90 ps | 0.95 | 1.30 | 1.37 | Example |

| | | | | | | | | | |
|---|---|---|---|---|---|---|---|---|---|
| *1 Iron loss of laminated core (W/kg)/Iron loss of base material (W/kg) | | | | | | | | | |

### (Example 2)

A steel slab containing Si: 2.8 mass%, Mn: 0.1 mass%, and Al: 1.2 mass% with the balance being Fe and incidental impurities was manufactured. The steel slab was subjected to hot rolling to form a hot rolled steel sheet of 1.6 mm, and subsequently, the hot rolled steel sheet was subjected to hot band annealing at 900°C for 60 seconds. Subsequently, the steel sheet was subjected to cold rolling to form a steel sheet having a thickness of 0.15 mm, and thereafter, the steel sheet was subjected to final annealing under the conditions of 1040 °C, 10 seconds, N₂:H₂ = 70:30 (volume ratio), and a dew point of -50°C. Subsequently, a coating liquid for forming an insulating coating was applied to the surface of the steel sheet in a manner such that a wet film thickness of 0.5 to 5 um was achieved. The coating liquid contained a mixture of aluminum dichromate, an emulsion resin, and ethylene glycol. The resultant was then baked at 300°C to form an insulating coating.

Epstein test specimens were cut from the electrical steel sheet coil prepared as described above. One half of the test specimens were cut in a rolling direction, and the other half were cut in a direction perpendicular to the rolling direction. An iron loss W10/400 of the base material was evaluated in accordance with a method specified in JIS C 2550-3. In parallel with the evaluation of the base material, processing was performed on the coil. The resulting pieces of the electrical steel sheet (material of the core) having a predetermined shape were stacked, and the pieces of the material of the core were abutted against each other to form a split stator. An integral rotor of a 3-phase 4-pole 24-slot distributed winding rare-earth IPM motor (rated power: 600 W) and the split stator were assembled into a motor. A no-load loss (W) of the produced motor was measured at a rotational speed of 3500 rpm with a motor characterization apparatus including a brake motor, a tachometer, a torque meter, a wattmeter, and the like.

The processing of the material of the core was performed at a laser output of 3.0 kW and a processing speed of 100 mpm. The other processing conditions are shown in Table 2. Nos. 1, 2, and 3 employed a laser processing method that used a pulsed laser having a pulse width of a nanosecond or more or a continuous laser. In Nos. 1, 2, and 3, the roughness factor of the surface of the electrical steel sheet that serves as the material of the core, in the case of performing processing in air and with the laser, was outside the range of the present invention; consequently, the processing that took place was typical processing that used thermal energy, and thus, the iron loss property of the resulting laminated core was significantly inferior. Nos. 7 and 9 employed a laser processing method that used a pulsed laser having a pulse width of a nanosecond or more or a continuous laser. In Nos. 7 and 9, the roughness factor of the surface of the electrical steel sheet that serves as the material of the core, in the case of performing processing in air and with the laser, was within the range of the present invention, whereas the beam diameter of the laser was greater than the range of the present invention. This resulted in an insufficient energy concentration. As a result, no shock wave was generated, and thus, the processing that took place was typical processing that used thermal energy; consequently, the iron loss property of the resulting laminated core was significantly inferior. In Examples, other than the above-described instances, the processing was performed within the ranges of the present invention; and thus, as can be seen, degradation of the iron loss property of the laminated cores was inhibited, and a good iron loss property was achieved.

**[Table 2]**

| No. | Processing atmosphere | Water film formed | Beam diameter of laser (µm) | Roughness factor of surface of electrical steel sheet | Pulse width of laser | Iron loss of base material (W/kg) | No-load loss of laminated core (W) | Ratio of increase in iron loss ^{*1} | Notes |
|---|---|---|---|---|---|---|---|---|---|
| 1 | Air | No | 100 | 1.6 | Continuous | 10 | 80 | 8.00 | Comparative Example |
| 2 | Air | No | 100 | 1.6 | 10 µs | 10 | 80 | 8.00 | Comparative Example |
| 3 | Air | No | 100 | 1.6 | 300 ns | 10 | 80 | 8.00 | Comparative Example |
| 4 | Air | No | 100 | 1.6 | 90 ps | 10 | 45 | 4.50 | Example |
| 5 | Air | No | 100 | 1.6 | 200 fs | 10 | 45 | 4.50 | Example |
| 6 | Air | No | 100 | 3.8 | 10 µs | 10 | 45 | 4.50 | Example |
| 7 | Air | No | 250 | 3.8 | 100 ns | 10 | 80 | 8.00 | Comparative Example |
| 8 | Air | Yes | 250 | 1.6 | 10 µs | 10 | 45 | 4.50 | Example |
| 9 | Air | No | 250 | 3.8 | Continuous | 10 | 80 | 8.00 | Comparative Example |
| 10 | Air | Yes | 250 | 3.8 | Continuous | 10 | 45 | 4.50 | Example |
| 11 | Air | No | 50 | 3.8 | Continuous | 10 | 45 | 4.50 | Example |
| 12 | In water | - | 300 | 1.2 | Continuous | 10 | 45 | 4.50 | Example |
| 13 | In water | - | 50 | 1.2 | 90 ps | 10 | 45 | 4.50 | Example |

| | | | | | | | | | |
|---|---|---|---|---|---|---|---|---|---|
| *1 No-load loss of laminated core (W)/Iron loss of base material (W/kg) | | | | | | | | | |

## Claims

1. A method for manufacturing a laminated core comprising:
processing an electrical steel sheet into pieces of the electrical steel sheet that have a predetermined shape, by using a pulsed laser having a beam diameter of 200 um or less and a pulse width of a nanosecond or more or by using a continuous laser having a beam diameter of 200 um or less, the electrical steel sheet including an insulating coating on a surface, the insulating coating having a roughness factor of a surface of 2.0 or greater; and
stacking the pieces of the electrical steel sheet resulting from the processing to manufacture the laminated core.

2. A method for manufacturing a laminated core comprising:
processing an electrical steel sheet into pieces of the electrical steel sheet that have a predetermined shape, the processing being performed by using a picosecond pulsed laser or a femtosecond pulsed laser or being performed in water or in a state in which a water film is present on a surface of the electrical steel sheet by using a pulsed laser having a pulse width of a nanosecond or more or by using a continuous laser, the electrical steel sheet including an insulating coating on the surface; and
stacking the pieces of the electrical steel sheet resulting from the processing to manufacture the laminated core.
